(19) Europäisches Patentamt / European Patent Office / Office européen des brevets

(11) **EP 4 342 924 A1**

(12) **EUROPÄISCHE PATENTANMELDUNG**

(43) Veröffentlichungstag:
**27.03.2024  Patentblatt 2024/13**

(21) Anmeldenummer: **22197730.9**

(22) Anmeldetag: **26.09.2022**

(51) Internationale Patentklassifikation (IPC):
**C08G 18/48** (2006.01)      **C08G 18/66** (2006.01)
**C08G 18/76** (2006.01)

(52) Gemeinsame Patentklassifikation (CPC):
**C08G 18/4825; C08G 18/4812; C08G 18/4816;
C08G 18/4854; C08G 18/6674; C08G 18/7671**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG
51373 Leverkusen (DE)**

(72) Erfinder:
• **Shen, Yi
41541 Dormagen (DE)**
• **Hermanns, Franz-Heinrich
41516 Grevenbroich (DE)**
• **Kessler, Michael
51377 Leverkusen (DE)**

(74) Vertreter: **Levpat
c/o Covestro AG
Gebäude K12
51365 Leverkusen (DE)**

(54) **VERFAHREN ZUR HERSTELLUNG VON POLYETHER-ENTHALTENDEN THERMOPLASTISCHEN POLYURETHANEN**

(57)    Die vorliegende Erfindung betrifft ein Verfahren zur Herstellung von Polyether-enthaltenden thermoplastischen Polyurethanen sowie Polyether-enthaltende thermoplastische Polyurethane erhalten oder erhältlich durch diese Verfahren. Des Weiteren betrifft die Erfindung die Verwendung dieser Polyether-enthaltenden thermoplastischen Polyurethane und Artikel, welche das Polyether-enthaltende thermoplastische Polyurethan umfassen oder daraus bestehen. Außerdem betrifft die Erfindung die Verwendung von einem C3-Polyether-Homopolymerpolyol in Kombination mit einem C2-Polyether-Homopolymerpolyol, einem C2/C3-Polyether-Block-copolymerpolyol und/oder C4-Polyether-Homopolymerpolyol, vorzugsweise von einem C3-Polyether-Homopolymerpolyol in Kombination mit einem C2/C3-Polyether-Block-copolymerpolyol; oder einem C4-Polyether-Homopolymerpolyol in Kombination mit einem C2-Polyether-Homopolymerpolyol und/oder einem C2/C3-Polyether-Block-copolymerpolyol zur Erhöhung der Tieftemperaturschlagzähigkeit und/oder der Zugfestigkeit von Polyether-enthaltenden thermoplastischen Polyurethanen.

EP 4 342 924 A1

**Beschreibung**

Die vorliegende Erfindung betrifft ein Verfahren zur Herstellung von Polyether-enthaltenden thermoplastischen Polyurethanen sowie Polyether-enthaltende thermoplastische Polyurethane erhalten oder erhältlich durch diese Verfahren. Des Weiteren betrifft die Erfindung die Verwendung dieser Polyether-enthaltenden thermoplastischen Polyurethane und Artikel, welche das Polyether-enthaltende thermoplastische Polyurethan umfassen oder daraus bestehen. Außerdem betrifft die Erfindung die Verwendung von einem C3-Polyether-Homopolymerpolyol in Kombination mit einem C2-Polyether-Homopolymerpolyol, einem C2/C3-Polyether-Block-copolymerpolyol und/oder C4-Polyether-Homopolymerpolyol, vorzugsweise von einem C3-Polyether-Homopolymerpolyol in Kombination mit einem C2/C3-Polyether-Block-copolymerpolyol; oder einem C4-Polyether-Homopolymerpolyol in Kombination mit einem C2-Polyether-Homopolymerpolyol und/oder einem C2/C3-Polyether-Block-copolymerpolyol zur Erhöhung der Tieftemperaturschlagzähigkeit und/oder der Zugfestigkeit von Polyether-enthaltenden thermoplastischen Polyurethanen.

**Stand der Technik**

Thermoplastisch Polyurethane (TPU) sind seit langem bekannt. Sie sind aufgrund der Kombination hochwertiger mechanischer Eigenschaften mit den bekannten Vorteilen der kostengünstigen thermoplastischen Verarbeitbarkeit von großer technischer Bedeutung. Durch die Verwendung unterschiedlicher chemischer Aufbaukomponenten lässt sich eine große Variationsbreite mechanischer Eigenschaften erzielen. Eine Übersicht über TPU, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben. TPU's werden aus linearen Polyolen, meist Polyether oder Polyester, organischen Diisocyanaten und kurzkettigen Diolen (Kettenverlängerer) aufgebaut. Die TPU werden üblicherweise lösungsmittelfrei und können kontinuierlich oder diskontinuierlich hergestellt werden. Die bekanntesten technischen Herstellverfahren, die auch technisch genutzt werden, sind das Bandverfahren (GB 1057018 A) und das Extruderverfahren (DE 1964834 A-1 und DE 2059570 A-1).

Zur Einstellung der Eigenschaften können die Aufbaukomponenten in relativ breiten molaren Verhältnissen variiert werden. Bewährt haben sich molare Verhältnisse von Makrodiolen zu Kettenverlängerern von 1:1 bis 1:12. Durch die Menge an Kettenverlängerer kann in einem weiten Bereich die Härte der TPU eingestellt werden. Hierdurch ergeben sich Produkte im Härtebereich von ca. 40 Shore A bis ca. 85 Shore D.

Zur Verbesserung des Verarbeitungsverhaltens, insbesondere der Zykluszeit, sind über den gesamten Härtebereich von ca. 40 Shore A bis ca. 85 Shore D solche TPU von besonderem Interesse, die bei Spritzgussartikeln nach dem Verarbeitungsvorgang eine sehr hohe Verfestigungsgeschwindigkeit aufweisen. Besonders bei harten TPU und weichen TPU kommt es häufig zu Problemen bei der chemischen Ankopplung von Hart- und Weichsegment aufgrund zu hoher Polaritätsunterschiede dieser Phasen. Dadurch kann das gesamte Potenzial der mechanischen Eigenschaften und der Verarbeitungseigenschaften oft nicht vollständig ausgeschöpft werden. Es hat nicht an Versuchen gefehlt, durch spezielle Verfahren diese Nachteile zu beheben.

Ein Verfahren zur Herstellung von thermoplastisch verarbeitbaren Polyurethanen wird von W. Bräuer u.a. beschrieben (EP-A 1757632). Durch ein mehrstufiges OH-Prepolymer Verfahren wird die Homogenität der TPU verbessert. Die verbesserte Homogenität verlangsamt jedoch die Verfestigungsgeschwindigkeit der TPU.

Ein Verfahren zur Herstellung von weichen, gut entformbaren thermoplastischen Polyurethanelastomeren mit geringer Schwindung wird von W. Bräuer u.a. beschrieben (EP-A 1338614). Durch Weichsegment-Vorverlängerung wurde das Entformungsverhalten von TPU zwischen 45 Shore A und 65 Shore A verbessert. Bei sehr hohen Härten hat dieses Verfahren deutlich Nachteile, weil es zu Unverträglichkeiten der Hart- und Weichphase kommt und somit eine gute Ankopplung dieser Phase nicht mehr stattfinden kann. Dadurch wird das für gute mechanische Eigenschaften notwendige hohe Molekulargewicht der TPU nicht erreicht. Auch ist dieses Verfahren in der Praxis wegen zu hohen und schwankenden Viskositäten der Prepolymerstufe sehr instabil und funktioniert unter 60 Shore A nicht mehr zufriedenstellend, sodass häufig Extruderstillstände vorkommen.

Um die Tieftemperaturschlagzähigkeit von beispielsweise Polyester basierten TPUs für Skischuh Anwendungen zu verbessern, werden Polyetherpolyole mit einem Molekulargewicht von größer als 1600 g/mol als Modifikator eingesetzt, wie z.B Polyetetramethylenetherglykol (US4980445A) und Polypropylendiolether (WO/2018/158327). Aufgrund der Unverträglichkeiten der Hart- und Weichphase im TPU, die zu einer schlechten Ankopplung dieser Phasen führt, können solche Polyether nur schwer als reine Weichphase in TPU, die härter als 60 Shore D sind, eingebaut werden. Ein hartes TPU mit guter Tieftemperaturschlagzähigkeit ist ohne Modifikator nur schwer herstellbar.

Der Einsatz von Polypropylenglykol bzw. Poly(propylenoxid)-Homopolymeren (im Folgenden auch als C3-Polyether-Homopolymerpolyol bezeichnet) als Polyolkomponente bei der Herstellung von thermoplastischen Polyurethanen ist unter anderem aufgrund der niedrigen Kosten als Einsatzmaterial interessant. Der Einsatz von Polypropylenglykol bei der Herstellung von thermoplastischen Polyurethanen ist beispielsweise aus WO 2020/109566 A1 bekannt, wobei Polyole auf Basis von Polypropylenglykol mit Polyisocyanaten umgesetzt werden.

Nachteilig an dem Einsatz von Polypropylenglykol als Polyolkomponente ist jedoch, dass nur thermoplastische Polyurethane mit relativ geringen Shore A beziehungsweise theoretischen Härten dargestellt werden können, die hinreichende mechanische Eigenschaften und Abriebfestigkeiten aufweisen. Meist zeigen harte thermoplastische Polyurethane auf Basis von Polypropylenglykol diese typischen Eigenschaften nur in geringer Ausprägung oder gar nicht und sind damit nicht für Anwendungen geeignet, bei denen deutlich härtere Materialien benötigt werden. Des Weiteren weisen diese Art von thermoplastischen Polyurethanen eine geringe Tieftemperaturschlagzähigkeit auf, wodurch auch eine Anwendung für Artikel, die auch niedrigen Temperaturen ausgesetzt sind, nicht mehr in Frage kommt.

Bessere Härten mit guten Tieftemperaturschlagzähigkeiten können mit Polytetrahydrofuranen (im Folgenenden auch C4-Polyether-Homopolymerpolyole genannt) erzielt werden. Diese haben jedoch den Nachteil, dass diese deutlich teurer sind als die vorgenannten C3-Polyether-Homopolymerpolyole sowie eine schlechtere $CO_2$-Bilanz aufweisen.

**Aufgabe der Erfindung**

Die Aufgabe der vorliegenden Erfindung bestand daher darin, ein Verfahren zur Herstellung von Polyether-enthaltenden thermoplastischen Polyurethanen mit verbesserten mechanischen Eigenschaften, insbesondere mit erhöhten Härten bzw. erhöhter Zugfestigkeit und/oder Tieftemperaturschlagzähigkeit bereitzustellen. Im Besonderen soll ein Verfahren zur kostengünstigeren Herstellung von Polyether-enthaltenden thermoplastischen Polyurethanen bereitgestellt werden, welches vorzugsweise eine verbesserte $CO_2$-Bilanz aufweist.

**Lösung der Aufgabe**

Diese Aufgabe wird durch ein Verfahren zur Herstellung von Polyether-enthaltenden thermoplastischen Polyurethanen durch Umsetzung einer Zusammensetzung, umfassend oder bestehend aus den folgenden Komponenten:

(A) mindestens ein Polyether-Homopolymerpolyol

(B) mindestens ein Polyisocyanat;

(C) mindestens ein Kettenverlängerer;

(D) gegebenenfalls ein Katalysator;

(E) gegebenenfalls mindestens ein Additiv, Hilfs- und/oder Zusatzstoff;

dadurch gekennzeichnet, dass

- das Polyether-Homopolymerpolyol ein C3-Polyether-Homopolymerpolyol (A1) ist und die Komponente (A) zusätzlich mindestens eine Komponente (A2) enthält, umfassend oder bestehend aus einem C2-Polyether-Homopolymerpolyol, einem C2/C3-Polyether-Block-copolymerpolyol und/oder einem C4-Polyether-Homopolymerpolyol, wobei das Massenverhältnis von Komponente (A1) zu (A2) von 95 : 5 bis 25 : 75 beträgt, bezogen auf die Gesamtmasse der Komponenten (A1) und (A2); oder

- das Polyether-Homopolymerpolyol ein C4-Polyether-Homopolymerpolyol (A3) ist, wobei die Komponente (A) kein C3-Polyether-Homopolymerpolyol enthält und die Komponente (A) zusätzlich mindestens eine Komponente (A4) enthält, umfassend oder bestehend aus einem C2-Polyether-Homopolymerpolyol und/oder einem C2/C3-Polyether-Block-copolymerpolyol, wobei das Massenverhältnis von Komponente (A3) zu (A4) von 95 : 5 bis 20 : 80 beträgt, bezogen auf die Gesamtmasse der Komponenten (A3) und (A4).

Des Weiteren betrifft die Erfindung ein Polyether-enthaltendes thermoplastisches Polyurethan erhalten oder erhältlich durch das erfindungsgemäße Verfahren.

Außerdem betrifft die Erfindung die Verwendung des erfindungsgemäßen Polyether-enthaltenden thermoplastischen Polyurethans zur Herstellung von Spritzgussartikeln; Extrusionsartikeln; Pressartikeln; Formpressartikeln; 3D-Druck-Artikeln; Artikeln des Maschinen-, Straßen und Schienenbaus; Medizin- und Zahnmedizinartikel, insbesondere Schienen zur Behandlung von Zahnfehlstellung; Schuhen, insbesondere Skischuhen; Artikeln der Automobilindustrie; Artikeln der Elektroindustrie, insbesondere Kabelummantelungen, Gehäuse und Stecker; Konsumartikeln; Beschichtungen; Schläuchen; Profilen; Riemen; Folien; Fasern; Vliesen; Textilien; Dämpfungselementen; Dichtungsmaterialien.

Ferner betrifft die Erfindung einen Artikel, welcher das erfindungsgemäße Polyether-enthaltende thermoplastische Polyurethan umfasst oder daraus besteht, wobei der Artikel bevorzugt ein Skischuh ist.

Schließlich betrifft die Erfindung die Verwendung von

- einem C3-Polyether-Homopolymerpolyol in Kombination mit einem C2-Polyether-Homopolymerpolyol, einem C2/C3-Polyether-Block-copolymerpolyol und/oder einem C4-Polyether-Homopolymerpolyol; oder
- einem C4-Polyether-Homopolymerpolyol in Kombination mit einem C2-Polyether-Homopolymerpolyol und/oder einem C2/C3-Polyether-Block-copolymerpolyol

zur Erhöhung der Charpy Schlagzähigkeit und/oder der Zugfestigkeit von Polyether-enthaltenden thermoplastischen Polyurethanen, insbesondere von erfindungsgemäßen Polyether-enthaltenden thermoplastischen Polyurethanen, wobei die Tieftemperaturschlagzähigkeit insbesondere als Charpy Schlagzähigkeit bestimmt wird.

Überraschenderweise wurde gefunden, dass wenn das Polyether-Homopolymerpolyol bei der Herstellung von Polyether-enthaltenden thermoplastischen Polyurethanen ein C3-Polyether-Homopolymerpolyol ist, die mechanischen Eigenschaften, insbesondere die Härte bzw. die Zugfestigkeit und/oder die Tieftemperaturschlagzähigkeit, dieser Polyurethane dadurch verbessert werden können, dass neben dem C3-Polyether-Homopolymerpolyol zusätzlich C2-Polyether-Homopolymerpolyole, C2/C3-Polyether-Block-copolymerpolyole und/oder C4-Polyether-Homopolymerpolyole eingesetzt werden. Erstaunlicherweise ist ähnliches festzustellen, wenn das Polyether-Homopolymerpolyol ein C4-Polyether-Homopolymerpolyole ist und daneben zusätzlich C2-Polyether-Homopolymerpolyole und/oder C2/C3-Polyether-Block-copolymerpolyole eingesetzt werden. Somit kann entweder der Einsatz der kostengünstigen C3-Polyether-Homopolymerpolyole für die Herstellung von Polyether-enthaltenden thermoplastischen Polyurethanen mit verbesserten mechanischen Eigenschaften ermöglicht oder der Einsatz der teuren C4-Polyether-Homopolymerpolyole ohne Einbußen hinsichtlich der mechanischen Eigenschaften reduziert werden

Im Rahmen dieser Erfindung wird unter C2-Polyether-Homopolymerpolyol ein Polyol auf Basis von Polyethylenglykol bzw. Poly(ethylenoxid), unter C3-Polyether-Homopolymerpolyol ein Polyol auf Basis von Polypropylenglykol bzw. Poly(propylenoxid), unter C2/C3-Polyether-Block-copolymerpolyol ein Polyol auf Basis von Polyethylenglykol bzw. Poly(ethylenoxid) sowie Polypropylenglykol bzw. Poly(propylenoxid) und unter C4-Polyether-Homopolymerpolyol ein Polyol auf Basis von Polytetramethylenglykol verstanden. Das "C" in "C2", "C3" etc. steht für Kohlenstoffatom, wobei die dahinterstehende Zahl die Anzahl der Kohlenstoffatome in der Repetiereinheit/Wiederholeinheit des jeweiligen Polymers angibt.

Es ist besonders bevorzugt, dass das Polyether-Homopolymerpolyol ein C3-Polyether-Homopolymerpolyol (A1) ist.

Das erfindungsgemäße Verfahren kann diskontinuierlich oder kontinuierlich geführt werden, wobei eine kontinuierliche Verfahrensführung vor allem im Industriemaßstab (beispielsweise als Inline-one-shot-Verfahren) bevorzugt ist. Ferner ist es bevorzugt, dass das Verfahren zudem lösungsmittelfrei geführt wird. Ferner sind mögliche Darstellungsprozesse zum Beispiel das sog. Prepolymerverfahren, MDI-Splitting oder das 3-Stufen-Äquivalenz-Prepolymerverfahren, welche dem Fachmann jedoch im Allgemeinen bekannt sind.

Bei dem erfindungsgemäßen Verfahren weist vorzugsweise das

- C2-Polyether-Homopolymerpolyol ein zahlenmittleres Molekulargewicht im Bereich von 500 bis 4000 g/mol, bevorzugt 1000 bis 3000 g/mol;

- C3-Polyether-Homopolymerpolyol ein zahlenmittleres Molekulargewicht im Bereich von 500 bis 8000 g/mol, bevorzugt 1000 bis 4500 g/mol;

- C2/C3-Polyether-Block-copolymerpolyol ein zahlenmittleres Molekulargewicht im Bereich von 1000 bis 4000 g/mol bevorzugt 1500 bis 2500 g/mol; und/oder

- C4-Polyether-Homopolymerpolyol ein zahlenmittleres Molekulargewicht im Bereich von 500 bis 4500 g/mol, bevorzugt 1500 bis 4500 g/mol

auf.

In einer weiteren Ausführung des erfindungsgemäßen Verfahrens beträgt die theoretische Härte des Polyether-enthaltenden thermoplastischen Polyurethans ≥ 40 %, wobei sich die theoretische Härte über folgende Formel berechnet:

$$\text{Theoretische Härte} = (n(\text{Kettenverlängerer}) * M(\text{Polyisocyanat}) + m(\text{Kettenverlängerer})) / m_{gesamt}$$

mit n = Stoffmengen der Komponenten, M = molare Masse der Komponenten und m = Massen der Komponenten.

Im Rahmen der Erfindung ist es ferner bevorzugt, dass das molare Verhältnis der Ethylenoxid-Bausteine zu Propylenoxid-Bausteinen im C2/C3-Polyether-Block-copolymerpolyol 95:5 bis 5:95, bevorzugt 80:20 bis 20:80 ist, bezogen auf die eingesetzten molaren Mengen der Alkylenoxide bei der Polyetherherstellung.

Außerdem ist es bevorzugt, dass das Massenverhältnis von Komponente (A1) zu (A2) von 65 : 35 bis 30 : 70, bezogen auf die Gesamtmasse der Komponenten (A1) und (A2) und/oder das Massenverhältnis von Komponente (A3) zu (A4) von 90 : 10 bis 50 : 50, bezogen auf die Gesamtmasse der Komponenten (A3) und (A4) beträgt.

Überdies ist es bevorzugt, dass das Polyisocyanat der Komponente (B) 4,4'-Diphenylmethandiisocyanat, 2,4'-Diphenylmethandiisocyanat, 2,2'-Diphenylmethandiisocyanat, 1,6-Hexamethylendiisocyanat, Toluol-2,4-diisocyanat, Toluol-2,6-diisocyanat, Isophorondiisocyanat, Naphthylen-1,5-diisocyanat, 1,1'-Methylenbis(4-isocyanatocyclo-hexan) oder Mischungen davon, bevorzugt 4,4'-Diphenylmethandiisocyanat, 2,4'-Diphenylmethandiisocyanat, 2,2'-Diphenylmethandiisocyanat oder Mischungen davon umfasst oder daraus besteht.

Vorzugsweise ist der Kettenverlängerer der Komponente (C) aus der Gruppe ausgewählt, umfassend oder bestehend aus 1,2-Ethandiol, 1,2-Propandiol, 1,3-Propandiol, 1,4-Butandiol, 1,5-Pentandiol, 1,6-Hexandiol, 1,4-Di-(beta-Hydroxyethyl)hydrochinon, Triethylenglykol, Tetraethylenglycol oder Mischungen davon, bevorzugt 1,2-Ethandiol, 1,4-Butandiol, 1,6-Hexandiol, Triethylenglykol oder Mischungen davon.

Als Katalysatoren (D) können die üblichen aus der Polyurethanchemie bekannten Katalysatoren eingesetzt werden. Geeignete Katalysatoren sind an sich bekannte und übliche tertiäre Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-[2,2,2]-octan, und ähnliche sowie insbesondere organische Metallverbindungen wie Titansäureester, Eisenverbindungen, Wismutverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- oder Zinnverbindungen. Ganz besonders bevorzugt sind Dibutylzinndilaurat, Zinndioctoat und Titansäureester.

Als Additive, Hilfs- und Zusatzstoffe (E) können beispielsweise Gleitmittel, wie Fettsäureester, deren Metallseifen, Fettsäureamide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische oder organische Füllstoffe, Nukleierungsmittel und Verstärkungsmittel sowie monofunktionelle Kettenabbrecher eingesetzt werden. Verstärkungsmittel sind insbesondere faserartige Verstärkungsstoffe wie anorganische Fasern, die nach dem Stand der Technik hergestellt werden und auch mit einer Schlichte beaufschlagt sein können. Als monofunktionelle Kettenabbrecher können Monoalkohole wie z. B. 1-Butanol, 1-Hexanol, 1-Oktanol und Stearylalkohol oder Monoamine, wie z. b. 1-Butylamin und Stearylamin eingesetzt werden, um ein bestimmtes TPU-Molekulargewicht einzustellen. Nähere Angaben über die genannten Hilfs- und Zusatzmittel sind der Fachliteratur zu entnehmen, beispielsweise J.H. Saunders, K.C. Frisch: "High Polymers", Band XVI, Polyurethane, Teil 1 und 2, Interscience Publishers 1962 bzw. 1964, R.Gächter, H.Müller (Ed.): Taschenbuch der Kunststoff-Additive, 3.Ausgabe, Hanser Verlag, München 1989, oder DE-A 29 01 774.

Es ist weiter bevorzugt, dass das Verfahren die folgenden Schritte umfasst oder daraus besteht:

i) Umsetzen einer Mischung aus der Gesamtmenge der Komponente (A), einer Teilmenge der Komponente (B) und gegebenenfalls einer Teilmenge oder der Gesamtmenge der Komponente (D) und/oder (E) zu einem NCO-funktionellen Prepolymer, wobei ein molares Verhältnis von (Teil- )Komponente (B) zu Komponente (A) im Bereich von 1,1:1,0 bis 5,0 : 1,0 vorliegt;

ii) Umsetzen des NCO-funktionellen Prepolymers aus Schritt i) mit der Gesamtmenge an Komponente (C) unter Erhalt eines OH-funktionellen Prepolymers, gegebenenfalls in Gegenwart einer weiteren Teilmenge oder der Restmenge der Komponente (D) und/oder (E);

iii) Umsetzen des OH-funktionellen Prepolymers aus Schritt ii) mit der Restmenge der Komponente (B) und gegebenenfalls der Restmenge der Komponente (D) und/oder (E) unter Erhalt des Polyether-enthaltenden thermoplastischen Polyurethans;

wobei in Schritt ii) vorzugsweise ein molares Verhältnis von NCO-funktionellen Gruppen zu OH-funktionellen Gruppen der Komponente (C) von kleiner 1,0 vorliegt.

Die Umsetzung wird bevorzugt bei einer Isocyanat-Kennzahl von 0,9 bis 1,2 durchgeführt, weiter bevorzugt von 0,95 bis 1,1, besonders bevorzugt von 0,97 bis 1,03. Unter der Isocyanat-Kennzahl (auch Kennzahl, NCO/OH-Index oder Isocyanat-Index genannt) wird hier der Quotient aus der tatsächlich eingesetzten Stoffmenge [mol] an Isocyanat-Gruppen und der tatsächlich eingesetzten Stoffmenge [mol] an Isocyanatreaktiven Gruppen verstanden. Mit anderen Worten gibt die Kennzahl das prozentuale Verhältnis der tatsächlich eingesetzten Isocyanat-Menge zur stöchiometrischen, d.h. für die Umsetzung der OH-Äquivalente berechnete Isocyanat-Menge an. Eine äquivalente Menge an NCO-Gruppen und NCO-reaktiven H-Atomen entspricht dabei einem NCO/OH-Index von 1. Die Isocyanat-Kennzahl wird dabei über folgende Formel berechnet:

$$\text{Kennzahl} = [(\text{mol Isocyanat-Gruppen}) / (\text{mol Isocyanat-reaktive Gruppen})]$$

Das erfindungsgemäße Polyether-enthaltende thermoplastische Polyurethan weist bevorzugt

- eine Zugfestigkeit von mindestens 17 MPa, bevorzugt mindestens 22 bis 60 MPa, gemessen nach ISO 53504 (2009-10); und/oder
- eine Charpy Schlagzähigkeit von mindestens 30 KJ/m$^2$, bevorzugt 50 bis 140 KJ/m$^2$, gemessen bei -20 °C nach DIN EN ISO 179/1eA (2010)

auf.

Die Charpy Schlagzähigkeit gemessen bei -20 °C nach DIN EN ISO179/1eA (2010) wird im Rahmen dieser Erfindung als Maß für die Tieftemperaturschlagzähigkeit verstanden. Dabei wird von den Spritzgießkörpern die Charpy Schlagzähigkeitsprüfungen nach DIN EN ISO179/1eA (2010) bei -20°C durchgeführt. Der Probekörper hat folgende Dimensionen: 80±2mm Länge, 10,0±0,2mm Breite und 4,0±0,2mm Dicke. Der Probekörper ist gekerbt. Der Kerbgrundradius rN beträgt 0,25±0,05mm.

**Ausführungsformen:**

Die vorliegende Erfindung betrifft insbesondere die folgenden Ausführungsformen:
Nach einer ersten Ausführungsform betrifft die Erfindung ein Verfahren zur Herstellung von Polyether-enthaltenden thermoplastischen Polyurethanen durch Umsetzung einer Zusammensetzung, umfassend oder bestehend aus den folgenden Komponenten:

(A) mindestens ein Polyether-Homopolymerpolyol

(B) mindestens ein Polyisocyanat;

(C) mindestens ein Kettenverlängerer;

(D) gegebenenfalls ein Katalysator;

(E) gegebenenfalls mindestens ein Additiv, Hilfs- und/oder Zusatzstoff;

dadurch gekennzeichnet, dass

- das Polyether-Homopolymerpolyol ein C3-Polyether-Homopolymerpolyol (A1) ist und die Komponente (A) zusätzlich mindestens eine Komponente (A2) enthält, umfassend oder bestehend aus einem C2-Polyether-Homopolymerpolyol, einem C2/C3-Polyether-Block-copolymerpolyol und/oder einem C4-Polyether-Homopolymerpolyol, wobei das Massenverhältnis von Komponente (A1) zu (A2) von 95 : 5 bis 25 : 75 beträgt, bezogen auf die Gesamtmasse der Komponenten (A1) und (A2); oder

- das Polyether-Homopolymerpolyol ein C4-Polyether-Homopolymerpolyol (A3) ist, wobei die Komponente (A) kein C3-Polyether-Homopolymerpolyol enthält und die Komponente (A) zusätzlich mindestens eine Komponente (A4) enthält, umfassend oder bestehend aus einem C2-Polyether-Homopolymerpolyol und/oder einem C2/C3-Polyether-Block-copolymerpolyol, wobei das Massenverhältnis von Komponente (A3) zu (A4) von 95 : 5 bis 20 : 80 beträgt, bezogen auf die Gesamtmasse der Komponenten (A3) und (A4).

Nach einer zweiten Ausführungsform betrifft die Erfindung ein Verfahren nach Ausführungsform 1, dadurch gekennzeichnet, dass das

- C2-Polyether-Homopolymerpolyol ein zahlenmittleres Molekulargewicht im Bereich von 500 bis 4000 g/mol, bevorzugt 1000 bis 3000 g/mol;

- C3-Polyether-Homopolymerpolyol ein zahlenmittleres Molekulargewicht im Bereich von 500 bis 8000 g/mol, bevorzugt 1000 bis 4500 g/mol;

- C2/C3-Polyether-Block-copolymerpolyol ein zahlenmittleres Molekulargewicht im Bereich von 1000 bis 4000 g/mol bevorzugt 1500 bis 2500 g/mol; und/oder

- C4-Polyether-Homopolymerpolyol ein zahlenmittleres Molekulargewicht im Bereich von 500 bis 4500 g/mol, bevorzugt 1500 bis 4500 g/mol

aufweist.

Nach einer dritten Ausführungsform betrifft die Erfindung ein Verfahren nach Ausführungsform 1 oder 2, dadurch gekennzeichnet, dass die theoretische Härte des Polyether-enthaltenden thermoplastischen Polyurethan $\geq$ 40 % beträgt, wobei sich die theoretische Härte über folgende Formel berechnet:

$$\text{Theoretische Härte} =$$

$$(\text{n(Kettenverlängerer)}*\text{M(Polyisocyanat)}+\text{m(Kettenverlängerer)})/m_{\text{gesamt}}$$

mit n = Stoffmengen der Komponenten, M = molare Masse der Komponenten und m = Massen der Komponenten

Nach einer vierten Ausführungsform betrifft die Erfindung ein Verfahren nach einem der vorstehenden Ausführungsformen, dadurch gekennzeichnet, dass das molare Verhältnis der Ethylenoxid-Bausteine zu Propylenoxid-Bausteinen im C2/C3-Polyether-Block-copolymerpolyol 95:5 bis 5:95, bevorzugt 80:20 bis 20:80 ist, bezogen auf die eingesetzten molaren Mengen der Alkylenoxide bei der Polyetherherstellung.

Nach einer fünften Ausführungsform betrifft die Erfindung ein Verfahren nach einem der vorstehenden Ausführungsformen, dadurch gekennzeichnet, dass das Massenverhältnis von Komponente (A1) zu (A2) von 65 : 35 bis 30 : 70, bezogen auf die Gesamtmasse der Komponenten (A1) und (A2) und/oder das Massenverhältnis von Komponente (A3) zu (A4) von 90 : 10 bis 50 : 50, bezogen auf die Gesamtmasse der Komponenten (A3) und (A4).

Nach einer sechsten Ausführungsform betrifft die Erfindung ein Verfahren nach einem der vorstehenden Ausführungsformen, dadurch gekennzeichnet, dass das Polyisocyanat der Komponente (B) 4,4'-Diphenylmethandiisocyanat, 2,4'-Diphenylmethandiisocyanat, 2,2'-Diphenylmethandiisocyanat, 1,6-Hexamethylendiisocyanat, Toluol-2,4-diisocyanat, Toluol-2,6-diisocyanat, Isophorondiisocyanat, Naphthylen-1,5-diisocyanat, 1,1'-Methylenbis(4-isocyanatocyclohexan) oder Mischungen davon, bevorzugt 4,4'-Diphenylmethandiisocyanat, 2,4'-Diphenylmethandiisocyanat, 2,2'-Diphenylmethandiisocyanat oder Mischungen davon umfasst oder daraus besteht.

Nach einer siebten Ausführungsform betrifft die Erfindung ein Verfahren nach einem der vorstehenden Ausführungsformen, dadurch gekennzeichnet, dass der Kettenverlängerer der Komponente (C) aus der Gruppe ausgewählt ist, umfassend oder bestehend aus 1,2-Ethandiol, 1,2-Propandiol, 1,3-Propandiol, 1,4-Butandiol, 1,5-Pentandiol, 1,6-Hexandiol, 1,4-Di-(beta-Hydroxyethyl)hydrochinon, Triethylenglykol, Tetraethylenglycol oder Mischungen davon, bevorzugt 1,2-Ethandiol, 1,4-Butandiol, 1,6-Hexandiol, Triethylenglykol oder Mischungen davon.

Nach einer achten Ausführungsform betrifft die Erfindung ein Verfahren nach einem der vorstehenden Ausführungsformen, dadurch gekennzeichnet, dass das Additiv, der Hilfs-und/oder der Zusatzstoff der Komponente (E) ausgewählt ist aus der Gruppe, umfassend oder bestehend aus Gleitmittel, insbesondere Fettsäureester, deren Metallseifen, Fettsäureamide sowie Siliconverbindungen; Antiblockmittel; Inhibitoren; Stabilisatoren; Flammschutzmittel; Farbstoffe; Pigmente; anorganische Füllstoffe; organische Füllstoffe; Nukleierungsmittel; Verstärkungsmittel, insbesondere anorganische Fasern; monofunktionelle Kettenabbrecher, insbesondere 1-Butanol, 1-Hexanol, 1-Oktanol, Stearylalkohol, 1-Butylamin und Stearylamin; oder Mischungen davon.

Nach einer neunten Ausführungsform betrifft die Erfindung ein Verfahren nach einem der vorstehenden Ausführungsformen, dadurch gekennzeichnet, dass das Verfahren die folgenden Schritte umfasst oder daraus besteht:

i) Umsetzen einer Mischung aus der Gesamtmenge der Komponente (A), einer Teilmenge der Komponente (B) und gegebenenfalls einer Teilmenge oder der Gesamtmenge der Komponente (D) und/oder (E) zu einem NCO-funktionellen Prepolymer, wobei ein molares Verhältnis von (Teil-)Komponente (B) zu Komponente (A) im Bereich von 1,1:1,0 bis 5,0 : 1,0 vorliegt;

ii) Umsetzen des NCO-funktionellen Prepolymers aus Schritt i) mit der Gesamtmenge an Komponente (C) unter Erhalt eines OH-funktionellen Prepolymers, gegebenenfalls in Gegenwart einer weiteren Teilmenge oder der Restmenge der Komponente (D) und/oder (E);

iii) Umsetzen des OH-funktionellen Prepolymers aus Schritt ii) mit der Restmenge der Komponente (B) und gegebenenfalls der Restmenge der Komponente (D) und/oder (E) unter Erhalt des Polyether-enthaltenden thermoplastischen Polyurethans;

wobei in Schritt ii) vorzugsweise ein molares Verhältnis von NCO-funktionellen Gruppen zu OH-funktionellen Gruppen der Komponente (C) von kleiner 1,0 vorliegt.

Nach einer zehnten Ausführungsform betrifft die Erfindung ein Verfahren nach einem der vorstehenden Ausführungsformen, dadurch gekennzeichnet, dass die Umsetzung bei einer Isocyanat-Kennzahl von 0,9 bis 1,2 durchgeführt wird, bevorzugt von 0,95 bis 1,1, weiter bevorzugt von 0,97 bis 1,03.

Nach einer elften Ausführungsform betrifft die Erfindung ein Polyether-enthaltendes thermoplastisches Polyurethan erhalten oder erhältlich durch ein Verfahren nach einer der Ausführungsformen 1 bis 10.

Nach einer zwölften Ausführungsform betrifft die Erfindung ein Polyether-enthaltendes thermoplastisches Polyurethan nach Ausführungsform 11, dadurch gekennzeichnet, dass das Polyether-enthaltende thermoplastische Polyurethan

- eine Zugfestigkeit von mindestens 17 MPa, bevorzugt mindestens 22 bis 60 MPa, gemessen nach ISO 53504 (2009-10); und/oder

- eine Charpy Schlagzähigkeit von mindestens 30 KJ/m$^2$, bevorzugt 50 bis 140 KJ/m$^2$, gemessen bei -20 °C nach DIN EN ISO 179/1eA (2010)

aufweist.

Nach einer dreizehnten Ausführungsform betrifft die Erfindung die Verwendung des Polyether-enthaltenden thermoplastischen Polyurethans nach Ausführungsform 11 oder 12 zur Herstellung von Spritzgussartikeln; Extrusionsartikeln; Pressartikeln; Formpressartikeln; 3D-Druck-Artikeln; Artikeln des Maschinen-, Straßen und Schienenbaus; Medizin- und Zahnmedizinartikel, insbesondere Schienen zur Behandlung von Zahnfehlstellung; Schuhen, insbesondere Skischuhen; Artikeln der Automobilindustrie; Artikeln der Elektroindustrie, insbesondere Kabelummantelungen, Gehäuse und Stecker; Konsumartikeln; Beschichtungen; Schläuchen; Profilen; Riemen; Folien; Fasern; Vliesen; Textilien; Dämpfungselementen; Dichtungsmaterialien.

Nach einer vierzehnten Ausführungsform betrifft die Erfindung einen Artikel, welcher ein Polyether-enthaltendes thermoplastisches Polyurethan nach Ausführungsform 11 oder 12 umfasst oder daraus besteht, wobei der Artikel bevorzugt ein Skischuh ist.

Nach einer fünfzehnten Ausführungsform betrifft die Erfindung die Verwendung von

- einem C3-Polyether-Homopolymerpolyol in Kombination mit einem C2-Polyether-Homopolymerpolyol, einem C2/C3-Polyether-Block-copolymerpolyol und/oder einem C4-Polyether-Homopolymerpolyol; oder

- einem C4-Polyether-Homopolymerpolyol in Kombination mit einem C2-Polyether-Homopolymerpolyol und/oder einem C2/C3-Polyether-Block-copolymerpolyol

zur Erhöhung der Tieftemperaturschlagzähigkeit und/oder der Zugfestigkeit von Polyether-enthaltenden thermoplastischen Polyurethanen, insbesondere von Polyether-enthaltenden thermoplastischen Polyurethanen gemäß Ausführungsform 11 oder 12, wobei die Tieftemperaturschlagzähigkeit insbesondere als Charpy Schlagzähigkeit bestimmt wird.

**Beispiele und Vergleichsbeispiele:**

Die vorliegende Erfindung wird im Folgenden anhand von Beispielen erörtert, ist jedoch nicht auf diese beschränkt.

Verwendete Komponenten:

- Polyol 1 = Polypropylenglycol (C3-Polyether-Homopolymerpolyol), Starter Propylenglycol (Poly(propylenoxid)-homopolymer); OH-Zahl ca. 56: Anteil sekundärer terminaler OH-Gruppen: >90%;
- Polyol 2 = Terathane®2000 (Handelsprodukt von Invista: Polytetramethylenglykol; OH-Zahl ca. 56), (C4-Polyether-Homopolymerpolyol);
- Polyol 3 = Poly(propylenoxid)-poly(ethylenoxide) block copolymer (C2/C3-Polyether-Block-copolymerpolyol): Propylenglycol (Starter) mit aufpolymerisierten Alkylenoxiden (molares Verhältnis von Ethylenoxideinheiten zu Propylenoxideinheiten von ca. 51:49); OH-Zahl ca. 56, Anteil primärer terminaler OH-Gruppen: >90%), KOH katalysiert
- Polyol 4 = Polypropylenglycol (C3-Polyether-Homopolymerpolyol), Starter Propylenglycol (Poly(propylenoxid)-homopolymer), OH-Zahl ca. 28: Anteil sekundärer terminaler OH-Gruppen: >90%)

- BDO = 1,4-Butandiol (BDO, Reinheit ≥ 99 Gew.-%) wurde von der Firma Ashland bezogen.
- TEG = Triethylenglykol (TEG, Reinheit ≥ 95 Gew.-%) wurde von der Firma Thermo Fischer (Kandel) GmbH bezogen.
- MDI = 4,4'-Diphenylmethandiisocyanat (MDI, Reinheit ≥ 99 Gew.-%) wurde von der Covestro AG bezogen.

Verwendete Messverfahren:

- Titration der OH-Zahlen nach DIN 53240-2:2007-11

- Zugversuch: Messung nach ISO 53504 (2009-10) mit einer Zuggeschwindigkeit von 200 mm/min;

- Charpy Schlagzähigkeitsprüfung (Tieftemperaturschlagzähigkeit): Von den Spritzgießkörpern wurden die Charpy Schlagzähigkeitsprüfungen nach DIN EN ISO179/1eA (2010) bei -20°C durchgeführt. Der Probekörper hat folgende Dimensionen: 80±2mm Länge, 10,0±0,2mm Breite und 4,0±0,2mm Dicke. Der Probekörper ist gekerbt. Der Kerbgrundradius rN beträgt 0,25±0,05mm;

Beispiele:

In der Tabelle 1 wird die Erfindung anhand einiger Beispiele verdeutlicht. Die verwendeten Herstellverfahren sind nachstehend beschrieben.

Herstellung (diskontinuierliches Verfahren):

Stufe 1: Die Teilmenge 1 (siehe Tabelle 1) des MDI's wird bei ca. 140°C mit 1 mol Polyol oder Polyolgemisch unter Rühren zum Umsatz > 90 mol-%, bezogen auf das Polyol, gebracht.
Stufe 2: Dem gerührten Reaktionsgemisch wird der Kettenverlängerer zugegeben und ca. 10 s intensiv gerührt.
Stufe 3: Die Teilmenge 2 (siehe Tabelle 1) des MDI's wird der gerührten Reaktionsmischung zugegeben. Das Reaktionsgemisch wird weitere 20 s gerührt, anschließend auf ein Blech gegossen und 30 Minuten bei 120°C getempert.
Die erhaltenen TPU-Gießplatten wurden geschnitten und granuliert. Das Granulat wurde mit einer Spritzgießmaschine vom Typ Arburg Allrounder 470S in einem Temperaturbereich von 180° bis 230°C und in einem Druckbereich von 650 bis 750 bar bei einem Einspritzstrom von 10 bis 35 cm3/s zu Stäben (Formtemperatur: 40°C; Stabgröße: 80×10×4mm) bzw. Platten (Formtemperatur: 70°C; Größe: 125x50x2 mm) verarbeitet.
Von den hergestellten TPU Produkten wurden die mechanischen Werte (Zugfestigkeit und Zugdehnung) sowie die Tieftemperaturschlagzähigkeit nach Charpy ermittelt.
Beispiel 1-18 beschreiben diskontinuierliche Verfahren.

Herstellung (kontinuierliches Verfahren z.B. Reaktionsextruder):

Analog zu den diskontinuierlichen Experimenten, kann die Herstellung des TPU auch kontinuierlich z.B. mittels eines Zweischneckenreaktionsextruders erfolgen (die Herstellung ist aber nicht auf diese Darstellungsform limitiert, siehe "Bandverfahren").
Mittels einer Zahnradpumpe wurde die auf 60°C vorgeheizte Teilmenge 1 des MDIs in ein mit einem Stachelmischer ausgerüstetes Rohr dosiert. Mittels einer zweiten Zahnradpumpe wurde ein auf 140°C geheiztes Polyol oder Polyolgemisch in das gleiche Rohr gepumpt. Das Rohr hat ein Länge/Durchmesser-Verhältnis von 8:1. Die Reaktionsmischung lief kontinuierlich in einen angeschlossenen Zweischneckenextruder, der von außen auf 140°C bis 220°C beheizt war. In der Mitte der Schnecke wurde der Kettenverlänger und die Teilmenge 2 des MDIs zugegeben. Die Drehzahl der Schneckenwelle betrug 300 U/min. Am Ende der Schnecke wurde die heiße Schmelze granuliert und abgekühlt. Das Granulat wurde durch Spritzguss zu Prüfkörpern verarbeitet, an denen die in der Tabelle aufgeführten Eigenschaften gemessen wurden.
Beispiel 19 beschreibt ein kontinuierliches Verfahren (Extruder Verfahren).

**Tabelle 1:**

| Versuchsnummer | Polyol (Massenver hältnis) | Kettenverl ängerer | Theor. Härte# | MDI Teilmenge 1 [mol] | MDI Teilmenge 2 [mol] | Zugfestigkeit [MPa] | Zugdehnung [%] | Charpy [-20°] |
|---|---|---|---|---|---|---|---|---|
| 1* | 1 | TEG/BDO 20/80 | 58 | 2 | 7,8 | ** | ** | ** |
| 2 | 1/2 (70/30) | TEG/BDO 20/80 | 58 | 2 | 7,8 | 26,2 | 198 | 103 |
| 3* | 3 | BDO | 58 | 2 | 8,1 | 38,8 | 361 | 15,6 |
| 4 | 3/1 (70/30) | TEG/BDO (20/80) | 58 | 2 | 7,8 | 26,6 | 237 | 124 |
| 5* | 3 | BDO | 62 | 2 | 9,8 | 24,1 | 285 | 12,6 |
| 6* | 3 | BDO | 66 | 2 | 11,9 | 31,1 | 233 | 5,93 |
| 7* | 3 | BDO | 70 | 2 | 14,5 | 37,9 | 127 | 4,47 |
| 8 | 3/1 (65/35) | BDO | 58 | 2 | 8,1 | 29,7 | 244 | 112,6 |
| 9 | 3/1 (65/35) | BDO | 62 | 2 | 9,8 | 36,1 | 217 | 70,6 |
| 10 | 3/1 (50/50) | BDO | 58 | 2 | 8,1 | 25,9 | 213 | 95,3 |
| 11 | 3/1 (50/50) | BDO | 62 | 2 | 9,8 | 30,9 | 159 | 52,5 |
| 12 | 3/1 (30/70) | BDO | 58 | 2 | 8,1 | 22,2 | 160 | 81,5 |
| 13 | 3/1 (30/70) | BDO | 62 | 2 | 9,8 | 23,9 | 99 | 58,8 |
| 14* | 3/1 (80/20) | BDO | 58 | 2 | 8,1 | 26,7 | 287 | 21 |
| 15 | 3/1 (60/40) | BDO | 58 | 2 | 8,1 | 37,2 | 255 | 98 |
| 16 | 3/4 (60/40) | BDO | 58 | 2 | 10,2 | 36 | 203 | 103 |
| 17 | 3/1 (60/40) | BDO | 62 | 2 | 9,8 | 35,3 | 174 | 122 |
| 18* | 1 | BDO | 58 | 2 | 8,1 | ** | ** | ** |
| 19 | 3/1 (60/40) | BDO | 58 | 2 | 8,1 | 32 | 195 | 119 |

* Nicht erfindungsgemäßes Vergleichsbeispiel; ** Keine Verarbeitung möglich;

# theor. Härte (= theoretische Härte bzw. TH) ist der Gewichtsanteil des Hartsegments im TPU: TH = (n(KV)*M(ISO)+m(KV))/m$_{ges}$ mit KV = Kettenverlängerer und ISO = Isocyanat (hier MDI)

- Vergleichsbeispiel 1 und 18 sind TPU-Rezepturen basierend auf Polypropylenglycol (C3-Polyether-Homopolymerpolyol), die TPU sind nicht darstellbar und/oder im Spritzguss verarbeitbar

- Vergleichsbeispiel 3 und 5-7 sind Rezepturen basierend auf Polypropylenpolyethylenglycol (C2/C3-Polyether-Blockcopolymerpolyol), die TPU mit guter Reißfestigkeit darstellen, aber eine schlechte Tieftemperaturschlagzähigkeit aufweisen.

- Beispiele 4, 8-13, 15-17 zeigen TPU-Rezepturen mit C2/C3-Polyether-Block-copolymerpolyol gemischt mit C3-Polyether-Homopolymerpolyol mit guter Reißfestigkeit und guter Tieftemperaturschlagzähigkeit (Charpy-Schlagzähigkeit).

- Vergleichsbeispiel 14 zeigt eine TPU-Rezeptur basierend auf C2/C3- Polyether-Blockcopolymerpolyol gemischt mit Polypropylenglycol (C3-Polyether-Homopolymerpolyol) in einem Verhältnis von etwa 80:20; das Material zeigt eine gute Reißfestigkeiten, aber keine befriedigende Tieftemperaturschlagzähigkeit

- Bespiel 2 zeigt eine TPU-Rezeptur basierend auf C3-Etherpolyol und einem C4-Polyether-Homopolymerpolyol (auch polyTHF oder PTMEG) mit guten mechanischen Eigenschaften und guter Tieftemperaturschlagzähigkeit.

- Beispiel 19 zeigt, dass das erfindungsgemäße Verfahren auch im Rahmen einer kontinuierlichen Verfahrensführung zu einer guten Reißfestigkeit mit gleichzeitig guter Tieftemperaturschlagzähigkeit des hergestellten Polyether-enthaltenden thermoplastischen Polyurethans führt.


**Patentansprüche**

1. Verfahren zur Herstellung von Polyether-enthaltenden thermoplastischen Polyurethanen durch Umsetzung einer Zusammensetzung, umfassend oder bestehend aus den folgenden Komponenten:

   (A) mindestens ein Polyether-Homopolymerpolyol
   (B) mindestens ein Polyisocyanat;
   (C) mindestens ein Kettenverlängerer;
   (D) gegebenenfalls ein Katalysator;
   (E) gegebenenfalls mindestens ein Additiv, Hilfs- und/oder Zusatzstoff;

   **dadurch gekennzeichnet, dass**

   • das Polyether-Homopolymerpolyol ein C3-Polyether-Homopolymerpolyol (A1) ist und die Komponente (A) zusätzlich mindestens eine Komponente (A2) enthält, umfassend oder bestehend aus einem C2-Polyether-Homopolymerpolyol, einem C2/C3-Polyether-Block-copolymerpolyol und/oder einem C4-Polyether-Homopolymerpolyol, wobei das Massenverhältnis von Komponente (A1) zu (A2) von 95 : 5 bis 25 : 75 beträgt, bezogen auf die Gesamtmasse der Komponenten (A1) und (A2); oder
   • das Polyether-Homopolymerpolyol ein C4-Polyether-Homopolymerpolyol (A3) ist, wobei die Komponente (A) kein C3-Polyether-Homopolymerpolyol enthält und die Komponente (A) zusätzlich mindestens eine Komponente (A4) enthält, umfassend oder bestehend aus einem C2-Polyether-Homopolymerpolyol und/oder einem C2/C3-Polyether-Block-copolymerpolyol, wobei das Massenverhältnis von Komponente (A3) zu (A4) von 95 : 5 bis 20 : 80 beträgt, bezogen auf die Gesamtmasse der Komponenten (A3) und (A4).

2. Verfahren nach Anspruch 1, **dadurch gekennzeichnet, dass** das

   • C2-Polyether-Homopolymerpolyol ein zahlenmittleres Molekulargewicht im Bereich von 500 bis 4000 g/mol, bevorzugt 1000 bis 3000 g/mol;
   • C3-Polyether-Homopolymerpolyol ein zahlenmittleres Molekulargewicht im Bereich von 500 bis 8000 g/mol, bevorzugt 1000 bis 4500 g/mol;
   • C2/C3-Polyether-Block-copolymerpolyol ein zahlenmittleres Molekulargewicht im Bereich von 1000 bis 4000 g/mol bevorzugt 1500 bis 2500 g/mol; und/oder
   • C4-Polyether-Homopolymerpolyol ein zahlenmittleres Molekulargewicht im Bereich von 500 bis 4500 g/mol, bevorzugt 1500 bis 4500 g/mol

aufweist.

3. Verfahren nach Anspruch 1 oder 2, **dadurch gekennzeichnet, dass** die theoretische Härte des Polyether-enthaltenden thermoplastischen Polyurethan ≥ 40 % beträgt, wobei sich die theoretische Härte über folgende Formel berechnet:

$$\text{Theoretische Härte} =$$

$$(n(\text{Kettenverlängerer})*M(\text{Polyisocyanat})+m(\text{Kettenverlängerer}))/m_{\text{gesamt}}$$

mit n = Stoffmengen der Komponenten, M = molare Masse der Komponenten und m = Massen der Komponenten.

4. Verfahren nach einem der vorstehenden Ansprüche, **dadurch gekennzeichnet, dass** das molare Verhältnis der Ethylenoxid-Bausteine zu Propylenoxid-Bausteinen im C2/C3-Polyether-Block-copolymerpolyol 95:5 bis 5:95, bevorzugt 80:20 bis 20:80 ist, bezogen auf die eingesetzten molaren Mengen der Alkylenoxide bei der Polyetherherstellung.

5. Verfahren nach einem der vorstehenden Ansprüche, **dadurch gekennzeichnet, dass** das Massenverhältnis von Komponente (A1) zu (A2) von 65 : 35 bis 30 : 70 beträgt, bezogen auf die Gesamtmasse der Komponenten (A1) und (A2) und/oder das Massenverhältnis von Komponente (A3) zu (A4) von 90 : 10 bis 50 : 50 beträgt, bezogen auf die Gesamtmasse der Komponenten (A3) und (A4).

6. Verfahren nach einem der vorstehenden Ansprüche, **dadurch gekennzeichnet, dass** das Polyisocyanat der Komponente (B) 4,4'-Diphenylmethandiisocyanat, 2,4'-Diphenylmethandiisocyanat, 2,2'-Diphenylmethandiisocyanat, 1,6-Hexamethylendiisocyanat, Toluol-2,4-diisocyanat, Toluol-2,6-diisocyanat, Isophorondiisocyanat, Naphthylen-1,5-diisocyanat, 1,1'-Methylenbis(4-isocyanatocyclo-hexan) oder Mischungen davon, bevorzugt 4,4'-Diphenylmethandiisocyanat, 2,4'-Diphenylmethandiisocyanat, 2,2'-Diphenylmethandiisocyanat oder Mischungen davon umfasst oder daraus besteht.

7. Verfahren nach einem der vorstehenden Ansprüche, **dadurch gekennzeichnet, dass** der Kettenverlängerer der Komponente (C) aus der Gruppe ausgewählt ist, umfassend oder bestehend aus 1,2-Ethandiol, 1,2-Propandiol, 1,3-Propandiol, 1,4-Butandiol, 1,5-Pentandiol, 1,6-Hexandiol, 1,4-Di-(beta-Hydroxyethyl)hydrochinon, Triethylenglykol, Tetraethylenglycol oder Mischungen davon, bevorzugt 1,2-Ethandiol, 1,4-Butandiol, 1,6-Hexandiol, Triethylenglykol oder Mischungen davon.

8. Verfahren nach einem der vorstehenden Ansprüche, **dadurch gekennzeichnet, dass** das Additiv, der Hilfs- und/oder der Zusatzstoff der Komponente (E) ausgewählt ist aus der Gruppe, umfassend oder bestehend aus Gleitmittel, insbesondere Fettsäureester, deren Metallseifen, Fettsäureamide sowie Siliconverbindungen; Antiblockmittel; Inhibitoren; Stabilisatoren; Flammschutzmittel; Farbstoffe; Pigmente; anorganische Füllstoffe; organische Füllstoffe; Nukleierungsmittel; Verstärkungsmittel, insbesondere anorganische Fasern; monofunktionelle Kettenabbrecher, insbesondere 1-Butanol, 1-Hexanol, 1-Oktanol, Stearylalkohol, 1-Butylamin und Stearylamin; oder Mischungen davon.

9. Verfahren nach einem der vorstehenden Ansprüche, **dadurch gekennzeichnet, dass** das Verfahren die folgenden Schritte umfasst oder daraus besteht:

i) Umsetzen einer Mischung aus der Gesamtmenge der Komponente (A), einer Teilmenge der Komponente (B) und gegebenenfalls einer Teilmenge oder der Gesamtmenge der Komponente (D) und/oder (E) zu einem NCO-funktionellen Prepolymer, wobei ein molares Verhältnis von (Teil- )Komponente (B) zu Komponente (A) im Bereich von 1,1:1,0 bis 5,0 : 1,0 vorliegt;
ii) Umsetzen des NCO-funktionellen Prepolymers aus Schritt i) mit der Gesamtmenge an Komponente (C) unter Erhalt eines OH-funktionellen Prepolymers, gegebenenfalls in Gegenwart einer weiteren Teilmenge oder der Restmenge der Komponente (D) und/oder (E);
iii) Umsetzen des OH-funktionellen Prepolymers aus Schritt ii) mit der Restmenge der Komponente (B) und gegebenenfalls der Restmenge der Komponente (D) und/oder (E) unter Erhalt des Polyether-enthaltenden thermoplastischen Polyurethans;

wobei in Schritt ii) vorzugsweise ein molares Verhältnis von NCO-funktionellen Gruppen zu OH-funktionellen Gruppen der Komponente (C) von kleiner 1,0 vorliegt.

10. Verfahren nach einem der vorstehenden Ansprüche, **dadurch gekennzeichnet, dass** die Umsetzung bei einer Isocyanat-Kennzahl von 0,9 bis 1,2 durchgeführt wird, bevorzugt von 0,95 bis 1,1, weiter bevorzugt von 0,97 bis 1,03.

11. Polyether-enthaltendes thermoplastisches Polyurethan erhalten oder erhältlich durch ein Verfahren nach einem der Ansprüche 1 bis 10.

12. Polyether-enthaltendes thermoplastisches Polyurethan nach Anspruch 11, **dadurch gekennzeichnet, dass** das Polyether-enthaltende thermoplastische Polyurethan

    • eine Zugfestigkeit von mindestens 17 MPa, bevorzugt mindestens 22 bis 60 MPa, gemessen nach ISO 53504 (2009-10); und/oder
    • eine Charpy Schlagzähigkeit von mindestens 30 KJ/m$^2$, bevorzugt 50 bis 140 KJ/m$^2$, gemessen bei -20 °C nach DIN EN ISO 179/1eA (2010)

    aufweist.

13. Verwendung des Polyether-enthaltenden thermoplastischen Polyurethans nach Anspruch 11 oder 12 zur Herstellung von Spritzgussartikeln; Extrusionsartikeln; Pressartikeln; Formpressartikeln; 3D-Druck-Artikeln; Artikeln des Maschinen-, Straßen und Schienenbaus; Medizin- und Zahnmedizinartikel, insbesondere Schienen zur Behandlung von Zahnfehlstellung; Schuhen, insbesondere Skischuhen; Artikeln der Automobilindustrie; Artikeln der Elektroindustrie, insbesondere Kabelummantelungen, Gehäuse und Stecker; Konsumartikeln; Beschichtungen; Schläuchen; Profilen; Riemen; Folien; Fasern; Vliesen; Textilien; Dämpfungselementen; Dichtungsmaterialien.

14. Artikel, welcher ein Polyether-enthaltendes thermoplastisches Polyurethan nach Anspruch 11 oder 12 umfasst oder daraus besteht, wobei der Artikel bevorzugt ein Skischuh ist.

15. Verwendung von

    • einem C3-Polyether-Homopolymerpolyol in Kombination mit einem C2-Polyether-Homopolymerpolyol, einem C2/C3-Polyether-Block-copolymerpolyol und/oder einem C4-Polyether-Homopolymerpolyol; oder
    • einem C4-Polyether-Homopolymerpolyol in Kombination mit einem C2-Polyether-Homopolymerpolyol und/oder einem C2/C3-Polyether-Block-copolymerpolyol

    zur Erhöhung der Tieftemperaturschlagzähigkeit und/oder der Zugfestigkeit von Polyether-enthaltenden thermoplastischen Polyurethanen, insbesondere von Polyether-enthaltenden thermoplastischen Polyurethanen gemäß Anspruch 11 oder 12, wobei die Tieftemperaturschlagzähigkeit insbesondere als Charpy Schlagzähigkeit bestimmt wird.

Europäisches Patentamt
European Patent Office
Office européen des brevets

# EUROPÄISCHER RECHERCHENBERICHT

**Nummer der Anmeldung**

**EP 22 19 7730**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2016/260516 A1 (SCHAEFER FRANK [DE] ET AL) 8. September 2016 (2016-09-08) * Absatz [0037]; Beispiele 5,7,9,16 * ----- | 1-15 | INV. C08G18/48 C08G18/66 C08G18/76 |
| A | EP 3 772 519 A1 (COVESTRO DEUTSCHLAND AG [DE]) 10. Februar 2021 (2021-02-10) * Ansprüche 1,7,8; Tabelle 1 * ----- | 1-15 | |
| A | US 2020/190246 A1 (SHEN YI [DE] ET AL) 18. Juni 2020 (2020-06-18) * Tabelle 1 * ----- | 1-15 | |

**RECHERCHIERTE SACHGEBIETE (IPC)**

C08G

Der vorliegende Recherchenbericht wurde für alle Patentansprüche erstellt

| Recherchenort | Abschlußdatum der Recherche | Prüfer |
|---|---|---|
| München | 9. März 2023 | Buestrich, Ralf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 22 19 7730

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-03-2023

| Im Recherchenbericht angeführtes Patentdokument | Datum der Veröffentlichung | Mitglied(er) der Patentfamilie | Datum der Veröffentlichung |
|---|---|---|---|
| US 2016260516 A1 | 08-09-2016 | BR 112016007211 A2 | 01-08-2017 |
| | | CN 105814104 A | 27-07-2016 |
| | | EP 3058009 A1 | 24-08-2016 |
| | | ES 2708652 T3 | 10-04-2019 |
| | | JP 6873213 B2 | 19-05-2021 |
| | | JP 2016535127 A | 10-11-2016 |
| | | JP 2020056028 A | 09-04-2020 |
| | | KR 20160071434 A | 21-06-2016 |
| | | PL 3058009 T3 | 30-04-2019 |
| | | US 2016260516 A1 | 08-09-2016 |
| | | WO 2015055631 A1 | 23-04-2015 |
| EP 3772519 A1 | 10-02-2021 | CN 114174369 A | 11-03-2022 |
| | | EP 3772519 A1 | 10-02-2021 |
| | | EP 4010390 A1 | 15-06-2022 |
| | | JP 2022543416 A | 12-10-2022 |
| | | KR 20220045957 A | 13-04-2022 |
| | | US 2022282022 A1 | 08-09-2022 |
| | | WO 2021023750 A1 | 11-02-2021 |
| US 2020190246 A1 | 18-06-2020 | CN 110366572 A | 22-10-2019 |
| | | EP 3589676 A1 | 08-01-2020 |
| | | US 2020190246 A1 | 18-06-2020 |
| | | WO 2018158327 A1 | 07-09-2018 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1057018 A
- DE 1964834 A1
- DE 2059570 A1
- EP 1757632 A
- EP 1338614 A
- US 4980445 A
- WO 2018158327 A
- WO 2020109566 A1
- DE 2901774 A

**In der Beschreibung aufgeführte Nicht-Patentliteratur**

- *Kunststoffe,* 1978, vol. 68, 819-825
- **KAUTSCHUK ; GUMMI.** *Kunststoffe,* 1982, vol. 35, 568-584
- **J.H. SAUNDERS ; K.C. FRISCH.** High Polymers. Interscience Publishers, 1962, vol. XVI
- Taschenbuch der Kunststoff-Additive. Hanser Verlag, 1989